# EUROPEAN PATENT SPECIFICATION

(11) **EP 3 413 600 B1**
(45) Date of publication and mention of the grant of the patent: **19.02.2020**
(21) Application number: 17174946.8
(22) Date of filing: 08.06.2017
(51) Int. Cl.: H04W 8/18, H04W 88/06

(54) **COMMUNICATION DEVICE AND METHOD OF MANAGING PROFILES**
KOMMUNIKATIONSVORRICHTUNG UND VERFAHREN ZUR VERWALTUNG VON PROFILEN
DISPOSITIF DE COMMUNICATION ET PROCÉDÉ DE GESTION DE PROFILS

(43) Date of publication of application: 12.12.2018
(73) Proprietor: NXP B.V., 5656 AG Eindhoven (NL)
(72) Inventor: MANAM, Veerababu, 5656 AG Eindhoven (NL); NEFFE, Ulrich, 5656 AG Eindhoven (NL)
(74) Representative: Krott, Michel

(56) References cited:
- EP-A1- 3 099 045
- WO-A1-2016/164632
- DE-A1-102016 206 488
- US-A1- 2015 350 879

## Description

### FIELD

The present disclosure relates to a communication device. Furthermore, the present disclosure relates to a method of managing profiles on a communication device, and to a corresponding computer program.

Some communication devices, such as smart phones, contain a plurality of processing modules: one or more subscriber identity modules (SIMs) or universal integrated circuit cards (UICCs), secure elements (SEs), embedded universal integrated circuit cards (eUICCs), or other secure storage and processing components. A secure element may for example be an embedded chip, more specifically a tamper-resistant integrated circuit with installed or pre-installed smart-card-grade applications, for instance payment applications, which have a prescribed functionality and a prescribed level of security. Furthermore, a secure element may implement security functions, such as cryptographic functions and authentication functions. A secure element may also perform the function of a UICC; this functionality may be referred to as an embedded universal integrated circuit card (eUICC).

The rollout of eUICCs in communication devices is challenging, because there are only few standards and there appears to be a lack of motivation within MNOs (mobile network operators) and other providers. Therefore, it is expected that traditional SIMs will still be used alongside eUICCs and other processing modules. Furthermore, modern communication devices often contain a plurality of traditional SIMs. These processing modules often support the communication processes performed by the device, for example by providing network credentials to a baseband processor of said device.

WO 2016/164632 A1 discloses methods and apparatus for managing processing of electronic Subscriber Identity Modules (eSIM) data at a mobile device. The mobile device comprises an embedded Universal Integrated Circuit Card (eUICC), which comprises an eSIM management unit that is capable to obtain an encrypted eSIM package, to decrypt the eSIM package to obtain eSIM contents formatted generically and not specifically tailored to requirements of the eUICC, to parse the formatted eSIM contents to retrieve individual eSIM (profile) components and to install each eSIM (profile) component for the eSIM in an eSIM security domain on the eUICC. The eSIM management unit is capable to act as local personalization server to provide local Trusted Service Manager (TSM) server functionality eSIM installation that transforms "generically formatted" eSIM contents into eSIM components that match specific requirements of the eUICC. An eUICC can support the loading and installing of eSIMs (profiles) that may be generated by different profile provisioning credential holders. The eSIM (profile) components may include files, applications, security domain settings, eSIM encryption/decryption keys, network access application (NAA) parameters, NAA algorithm parameters and keys, over-the-air (OTA) keys, personal identification numbers (PINs), and/or personal unlock keys (PUKs). The eSIM management unit is further capable, after having parsed different eSIM packages into different eSIM contents, to install the different eSIM contents in different security domains in accordance with hardware, software and/or OS requirements for the eSIM and/or for a mobile network operator.

US 2015/0350879 A1 discloses methods and apparatus for identifying and accessing an eSIM and associated content of the eSIM in a multiple eSIM configuration. An eUICC can include multiple eSIMs, where each eSIM can include its own file structure and applications. Aiming to uniquely address specific files in specific eSIMs, a processor of a mobile device transmits a special command to the eUICC, including an identification that uniquely identifies an eSIM in the eUICC. After selecting the eSIM, the processor can access the file structure and applications of the selected eSIM. The processor can then use existing commands to access content in the selected eSIM. The special command can direct the eUICC to activate or deactivate content associated with the selected eSIM. Some UICCs may include rewritable memory that can facilitate eSIM updates for accessing extended features provided by mobile network operators.

DE 10 2016 206 488 A1 discloses methods and apparatus for managing plural eSIMs within a user equipment (UE) device, wherein an active eSIM in the UE device may be managed/updated, while an active eSIM can be used by the UE device for communicating with an according network. The UE device includes a secure element, e.g. corresponding to an eUICC. The secure element includes secure processor and memory components, which enable the secure element to operate an eSIM manager to manage one or more eSIMs. The eSIMs, which are stored in the secure element, may be provided initially to the UE device by an external eSIM server operated by a mobile network operator.

EP 3 099 045 A1 discloses a method and apparatus for managing a plurality of profiles in a SIM module. The SIM module supports at least two profiles of two network operators and a profile manager application, which is configured to enable either a first profile or a second profile, e.g. in response to a remote management command or due to another event detected by the profile manager PMa. Each profile is represented in a memory area in the SIM card, and may have an associated Over the Air (OTA) key, which is used to encrypt the remote management commands sent by a mobile network operator to a given SIM card.

### SUMMARY

The present invention provides a communication device according to the appended independent claim 1, a method of managing profiles on a communication device according to the appended independent claim 11, and a computer program according to the appended independent claim 14.

According to a first aspect of the present disclosure, a communication device is provided, comprising: a plurality of processing modules arranged to process data and to store one or more profiles; a profile management unit arranged to manage one or more profiles stored on said processing modules.

In an embodiment, the profile management unit is further arranged to distribute one or more profiles to the processing modules.

In an embodiment, distributing the profiles includes routing downloaded profiles to said processing modules.

In an embodiment, said routing is performed in dependence on a result of an eligibility test.

In an embodiment, the eligibility test comprises determining which processing module has the capability to host and execute a given profile.

In an embodiment, the eligibility test is performed on parameters of memory availability and required support for a given technology.

In an embodiment, the processing modules include at least one of: a subscriber identity module, SIM, a secure element, SE, an embedded universal integrated circuit card, eUICC.

In an embodiment, the communication device further comprises a user interface for selecting a profile.

In an embodiment, said profiles include at least one of: a file system, one or more network access credentials, one or more applications and application-related data.

In an embodiment, the communication device further comprises a baseband processor and a near field communication, NFC, controller, wherein the profile management unit is further arranged to cause the baseband processor and/or NFC controller to switch to the selected profile.

In an embodiment, switching to the selected profile includes that the baseband processor initializes the processing module on which the selected profile is stored.

In an embodiment, switching to the selected profile includes that the baseband processor authenticates said processing module to a cellular network.

In an embodiment, the NFC controller is arranged to multiplex the processing modules.

According to a second aspect of the present disclosure, a method is conceived of managing profiles on a communication device, said communication device comprising a plurality of processing modules arranged to process data and to store one or more profiles, wherein a profile management unit of said communication device manages one or more profiles stored on said processing modules.

According to a third aspect of the present disclosure, a computer program is provided, comprising non-transient executable instructions which, when executed, carry out a method of the kind set forth.

### DESCRIPTION OF DRAWINGS

Embodiments will be described in more detail with reference to the appended drawings, in which:
- Fig. 1: shows an illustrative embodiment of a communication device;
- Fig. 2: shows another illustrative embodiment of a communication device;
- Fig. 3: shows a further illustrative embodiment of a communication device;
- Fig. 4: shows an illustrative embodiment of a profile management method.

### DESCRIPTION OF EMBODIMENTS

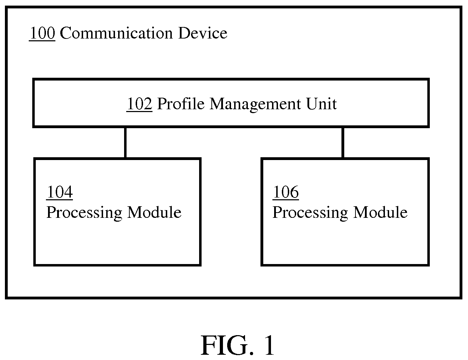

**Fig. 1** shows an illustrative embodiment of a communication device 100. The communication device 100 comprises a plurality of processing modules 104, 106. It will be appreciated that, although only two processing modules 104, 106 are shown, the communication device 100 may comprise more than two processing modules. The processing modules may for example be subscriber identity modules (SIMs) or universal integrated circuit cards (UICCs), secure elements (SEs), embedded universal integrated circuit cards (eUICCs), or other secure storage and processing components. The communication device may be a mobile phone. Furthermore, the communication device 100 comprises a profile management unit 102 that is operatively coupled to the processing modules 104, 106. The processing modules 104, 106 are arranged to process data and to store one or more profiles. Furthermore, the profile management unit 102 is arranged to manage one or more profiles stored on the processing modules.

In particular, a profile may be regarded as a collection of resources stored on a processing module of the kind set forth. In a practical and efficient implementation, such a profile may include at least one of a file system, one or more network access credentials, one or more applications and data related to or operated upon by said applications. In operation, components of the communication device - such as a baseband processor - may make use of these resources. For instance, a baseband processor may retrieve access credentials contained in such a profile, with the purpose of connecting the communication device to a cellular network. The presently disclosed device and method facilitate managing profiles if there are multiple processing modules on which profiles can be stored.

In an embodiment, the profile management unit 102 is further arranged to distribute one or more profiles to the processing modules 104, 106. In this way, the profiles can be distributed over the processing modules 104, 106, in a balanced manner, for example. More specifically, the profile management unit 102 may perform a local eligibility test on different processing modules 104, 106 - for example physical on-board SIMs - and route downloaded profiles to eligible processing modules 104, 106, for example in an order of priority. Said eligibility test may comprise determining which processing module has the capability to host and execute a given profile. The eligibility test may be performed on the parameters of memory availability and the required support for a given technology. For example, if a processing module currently has no sufficient memory, it will fail the eligibility test. Thus, in a practical and efficient implementation, distributing the profiles includes routing downloaded profiles to the processing modules 104, 106. Furthermore, in an embodiment, said routing is performed in dependence on a result of an eligibility test. In this way, it may be ensured that profiles are routed to processing modules that are capable of hosting the profiles. Furthermore, the use of resources for hosting profiles in the system as a whole may be balanced, e.g. the profiles may be routed to processing modules that still have a lot of available memory space. Furthermore, in an embodiment, the communication device 100 comprises a user interface (not shown) for selecting a profile. In this way, profiles can easily be selected by a user of the communication device 100.

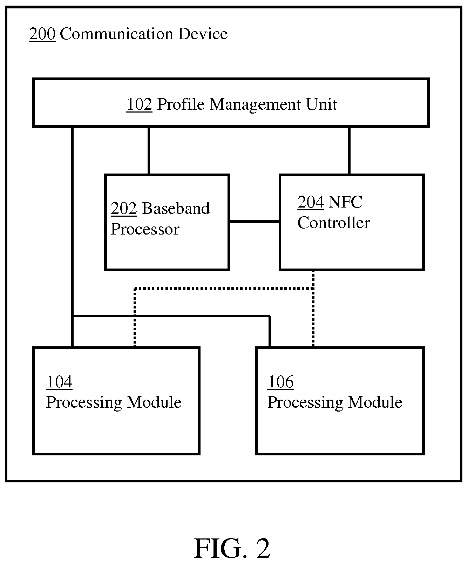

**Fig. 2** shows another illustrative embodiment of a communication device 200. The communication device 200 comprises, in addition to the components shown in Fig. 1, a baseband processor 202 operatively coupled to the profile management unit 102, and a near field communication (NFC) controller 204 operatively coupled to the baseband processor 202, profile management unit 102 and the processing modules 104, 106. In an embodiment, the communication device 200 thus comprises a baseband processor 202 and an NFC controller 204. Furthermore, the profile management unit 102 is arranged to cause the baseband processor 202 and/or NFC controller 204 to switch to a selected profile. In this way, the communication device 200 may switch easily to another profile. Furthermore, in an embodiment, switching to the selected profile includes that the baseband processor 202 initializes the processing module on which the selected profile is stored. In this way, the profile is quickly available for use. Furthermore, in an embodiment, switching to the selected profile includes that the baseband processor 202 authenticates the processing module on which the profile is stored to a cellular network, which facilitates maintaining security.

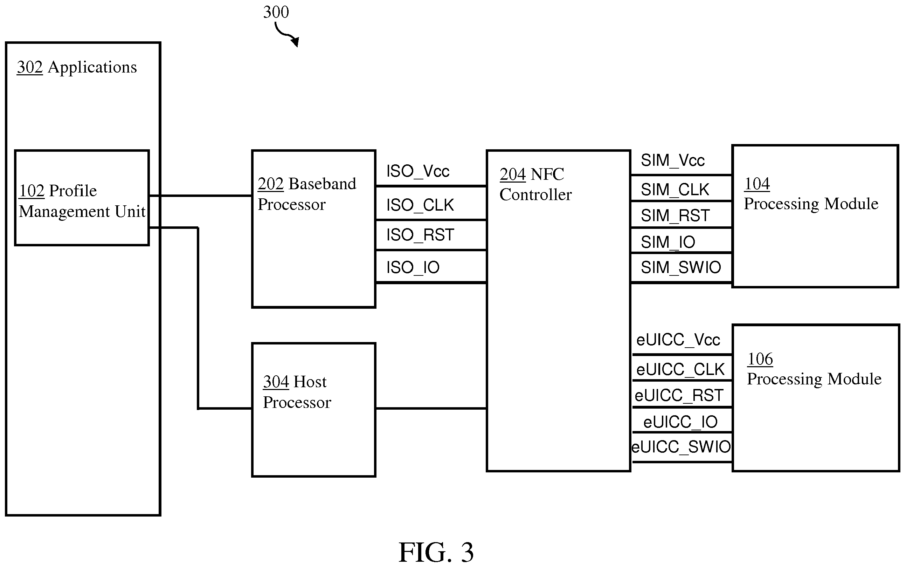

**Fig. 3** shows a further illustrative embodiment of a communication device 300. The communication device 300 comprises, in addition to the components shown in Fig. 1 and Fig. 2, a set of applications 302. In a practical embodiment, the profile management unit 102 may be implemented as an application stored in the communication device 300. Furthermore, the communication device 300 comprises a host processor 304. The host processor 304 is operatively coupled to the NFC controller 304. The host processor 304 may be arranged to control and execute the operations of the profile management unit 102. In an embodiment, the NFC controller 204 is arranged to multiplex the processing modules 104, 106. Multiplexing means, in this context, the ability to extend a single SIM/eUICC interface to support two or more SIMs/eUICCs. For example, the multiplex operation of the NFC controller 204 may swap the channels ISO_IO, ISO_CLK and ISO_RST at run time, to achieve this.

In particular, the profile management unit 102 may be arranged to control a user interface (not shown) of the communication device 300, and to manage the profiles on different on-board profile hosts (i.e., processing modules 104, 106). The profile management unit 102 may manage the profiles by interacting with the NFC controller 204. The host processor 304 may be arranged to execute the profile management unit 102, and to offer NFC controller interface (NCI) middleware for the profile management unit 102, so that the latter can interact with the NFC controller 204 and control the switching between different processing modules 104, 106 and the profiles stored thereon. The baseband processor 202 may offer, in addition to enabling network communication, a communication framework to the profile management unit 102. Specifically, the baseband processor 202 may provide certain services to the profile management unit 102 in efforts to conclude profile activation. For example, the baseband processor 202 may provide a means to the profile management unit 102 to perform a reset procedure. The NFC controller 204 may be arranged to multiplex the processing modules 104, 106 under control of the profile management unit 102.

Further example embodiments will now be described. In these embodiments, the profile management unit is referred to as the OTIA (Over the Internet assistant). Profiles can be downloaded from the internet using, for instance, a Wi-Fi communication channel or a Bluetooth communication channel. Alternatively, the OTIA may initiate profile downloads through cellular communication, for example in interaction with an Over the Air (OTA) assistant. In some embodiments, the OTIA, NFC controller and baseband processor may be provided with the capability to scale multi-SIM user equipment (UE) for SIM-free distribution of profiles, to multiplex physical SIMs at runtime depending on the configuration of the UE, and to support eUICC migration while classic SIMs continue to be used. The user equipment (i.e., the communication device) may contain two or more SIM cards. Each SIM card may be implemented as a removable smart card, or one or more may be soldered onto a circuit board in the UE. The UE may include a host processor, SIM/eUICC, an NFC controller with profile routing capability, and the OTI assistant (OTIA) application. The OTIA application may be executed by the host processor and may instruct or request the NFC controller to route a given profile to a particular processing module.

Each processing module may act as a profile host. Profile hosting is a framework that enables storage of one or more profiles and that provides a secure execution environment for these profiles. In accordance with the present disclosure, the user of the equipment may select a desired profile without having to know where the profile hosted and without having to know if the profile should be downloaded. The baseband processor may provide cellular communication. It will be appreciated that other data or applications may be stored in the processing modules, in addition to said profiles. The NFC controller may contain a routing registry and routing capability to multiplex between the various processing modules, power management unit and NFC circuit. The host processor may enable the OTIA on the user equipment and control a user interface through which profiles can be selected, for example. The OTIA may keep a list of installed profiles, perform local profile management operations, and initiate profile downloads through cellular communication via an Over the Air (OTA) assistant, or download profiles from the internet using e.g. Wi-Fi or Bluetooth.

The NFC controller may provide the capability to multiplex processing modules on the basis of profile association. The multiplexing may be a result of an event of enabling, disabling, downloading or deleting of a profile. The event could in turn be the result of a selection by the user (using the OTIA), of a network push message or of UE boot-up operations.

As mentioned above, a profile may comprise at least one of a file system, network access credentials, applications and application-related data. The aim of each profile is to support a communication device in acquiring access to a specific cellular network infrastructure. In addition, the profile may provide a bundle of location-based services and other services. Each profile may comprise several profile elements, such as an MNO-SD ("MNO Security Domain"), a SSD ("Supplementary Security Domain"), an MNO-CASD ("MNO Certificate Authority Security Domain"), contact-based applications, contactless applications, and NAAs ("Network Access Application"). A processing module (i.e., a profile host) - for example a SIM, eUICC or eSIM - provides a platform for hosting a profile. A profile may be trust-provisioned into the die of a profile host (e.g., a classic SIM) during manufacturing of said host. Alternatively, a bootstrap profile may be trust-provisioned into the die of a profile host (e.g., a eUICC) during manufacturing of said host, and subsequent profiles may be trust-provisioned and delivered over the air (OTA). The format of a profile may be compliant with the "SIMAlliance Profile Format". Furthermore, the management of the profiles may be compliant with the architectures defined by several eUICC standardization bodies (e.g., GSMA, ETSI, 3GPP, NFC Forum, Global Platform, Oracle Java Card). The profiles can be delivered both over the internet (OTI) as well as over the air (OTA).

Profile hosting may provide a platform to store single or multiple profiles, and their assets, securely, as well as a secure execution environment for executing the byte code of the profiles. The profile hosting may be compliant with different standards defined for profile management (GSMA, NFC forum, European Telecommunications Standards Institute (ETSI), Java Card, Global Platform (GP), and SIMAlliance). The OTIA may be arranged to distribute and efficiently manage profiles across different on-board SIMs. Furthermore, the OTIA may be configured to choose high throughput communication interfaces. Also, the OTIA may be capable to execute commands over the baseband processor as well as the NFC controller, in multiplexing of SIMs, at runtime depending on the entity that controls the interfaces. The OTIA may fetch and show all the profiles currently installed; in that case the NFC controller should provide the functions that are necessary to read out data from the controller's registry.

The NFC controller may be arranged to multiplex different profile hosts in conjunction with different elements of the system such as the baseband processor, host processor, contactless terminals (POS terminals, card or tag) and the profile hosts. It may communicate with contactless terminals over proximity frequency bands with different data transfer rates. The NFC controller may be interfaced to the host processor over SPI, UART or I2C, and the underlying protocol may be NCI. The NFC controller may provide a pass-through bridge for active profile hosts over an UART ISO7816 interface or a proprietary interface. The NFC controller and the profile hosts may mutually communicate over a SWIO interface and/or proprietary interfaces. The NFC controller may handle a profile host as an emulation. Furthermore, the NFC controller may contain a registry entry for each profile alongside information of physical host that it is hosted on, in its persistent registry. The initial entry may be updated at manufacturing or during first boot-up, or a default mechanism may be defined to ensure that at least one host is active. When a profile switch command is issued, the NFC controller may evaluate if switching of physical connections is necessary. After the switching, the NFC controller may request the OTIA to perform a reset over the baseband processor for the switching to be effective. The NFC controller may know beforehand on which physical slot the active profile is present and evaluate if swapping of connections is necessary in response to a profile switch command.

The baseband processor may interact with a profile host over UART ISO7816 or SWIO or any proprietary interface. The baseband processor may perform, through the NFC controller if switching is done by the NFC controller, activation of a physical interface, SIM initialization, and authentication to the network. The baseband processor may notify the NFC controller of the singe wire protocol (SWP) and HCI activation. Furthermore, the baseband processor may perform a reset when requested by the OTIA. Depending on its configuration (e.g., Dual SIM Dual Active, Dual SIM Dual Standby and Dual SIM Single Active), the baseband processor may drive more than one profile host simultaneously by itself or via NFC pass-through (i.e., through the NFC controller).

The communication device (i.e., user equipment) may thus be a device that hosts the platform for the baseband processor and an application processor (host processor). The baseband processor may enable wireless (i.e., cellular) communication. The application processor may provide an application execution environment and a communication application programming interface (API) for the OTIA to interface with the NFC controller, baseband processor and the active profile host. The active profile host may support the communication device to authenticate itself and to gain access to a network. Each profile may be uniquely identified, for example using an International Mobile Subscriber Identity (IMSI), an eUICC-ID (EID), or an Integrated Circuit Card Identifier (ICCID). The identity of a profile may be available in the metadata of a profile if it is GSMA eUICC compliant device; otherwise the OTIA may read the necessary information from a SIM file system.

A SIM or eSIM is a standardized or proprietary form factor that is capable of hosting one or more profiles, thereby enabling the user equipment to acquire access to one or more cellular networks. SIM, USIM, RUIM and CSIM are a few of the network access clients that represent cellular technologies such as GSM, UMTS, CDMA and LTE respectively. In accordance with the present disclosure, a SIM may support profile management functions not only through an UART ISO7816 interface, but also over SWP or any other suitable interface (e.g., SPI or I2C).

A secure element (SE) may have a proprietary form factor, and it may be soldered into the user equipment. As mentioned above, a secure element may for example be an embedded chip, more specifically a tamper-resistant integrated circuit with installed or pre-installed smart-card-grade applications, for instance payment applications, which have a prescribed functionality and a prescribed level of security. SEs are primarily used for contactless applications, such as contactless payments, transit applications and personal identification. A secure element may support SWP, SPI and I2C communication interfaces. In accordance with the present disclosure, a SE may also provide the functionality of a eUICC, thus enabling the SE for telecommunication applications. Furthermore, profiles may be managed on the SE in the same way as on classic SIMs and other processing modules.

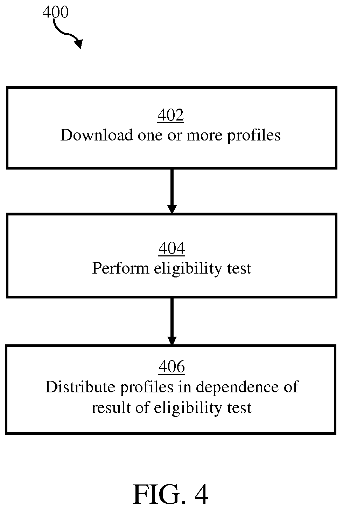

**Fig. 4** shows an illustrative embodiment of a profile management method 400. The profile management method 400 comprises, at 402, downloading one or more profiles. Furthermore, the method comprises, at 404, performing an eligibility test. As mentioned above, the eligibility test may comprise determining which processing module has the capability to host and execute a given profile. In a practical and efficient implementation, the the eligibility test is performed on parameters of memory availability and required support for a given technology. Furthermore, the method comprises, at 406, distributing (e.g., routing) the downloaded profile or profiles in dependence of a result of said eligibility test.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "mobile device" refers to any type of portable electronic device, including a cellular telephone, a Personal Digital Assistant (PDA), smartphone, tablet etc. Furthermore, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: communication device
- 102: profile management unit
- 104: processing module
- 106: processing module
- 200: communication device
- 202: baseband processor
- 204: NFC controller
- 300: communication device
- 302: applications
- 304: host processor
- 400: profile management method
- 402: download one or more profiles
- 404: perform eligibility test
- 406: distribute profiles in dependence of result of eligibility test

## Claims

1. A communication device (100, 200, 300), comprising:
a plurality of processing modules (104, 106) arranged to process data and to store one or more profiles;
a profile management unit (102) arranged to manage one or more profiles stored on said processing modules (104, 106),
wherein the profile management unit (102) is arranged to distribute one or more profiles to the processing modules (104, 106), including routing downloaded profiles to said processing modules (104, 106) in dependence on a result of an eligibility test,
**characterized in that** the profile management unit (102) is arranged to perform the eligibility test on parameters of memory availability and required support for a given technology.

2. The communication device of claim 1, wherein the profile management unit (102) is arranged to, when performing the eligibility test, determine which processing module (104, 106) has the capability to host and execute a given profile.

3. The communication device of claim 1 or 2, wherein the profile management unit (102) is arranged to distribute a plurality of profiles to the processing modules (104, 106) in a balanced manner.

4. The communication device of claim 3, wherein distributing a plurality of profiles to the processing modules (104, 106) in a balanced manner comprises balancing the use of resources, including available memory space of the particular processing modules (104, 106), for hosting profiles in the communication device (100, 200, 300) as a whole in a balanced manner.

5. The communication device of any preceding claim, wherein the processing modules (104, 106) include at least one of: a subscriber identity module, SIM, a secure element, SE, an embedded universal integrated circuit card, eUICC.

6. The communication device (100) of any preceding claim, further comprising a user interface for selecting a profile.

7. The communication device (100, 200, 300) of any preceding claim, wherein said profiles include at least one of: a file system, one or more network access credentials, one or more applications and application-related data.

8. The communication device (200, 300) of any preceding claim, further comprising a baseband processor (202) and a near field communication, NFC, controller (204), wherein the profile management unit (102) is further arranged to cause the baseband processor (202) and/or NFC controller (204) to switch to the selected profile.

9. The communication device (200, 300) of claim 8, wherein the profile management unit (102) is further arranged to cause the baseband processor (202) to initialize the processing module (104, 106) on which the selected profile is stored.

10. The communication device of claim 9, wherein the profile management unit (102) is further arranged to cause the baseband processor (202) to authenticate said processing module (104, 106) to a cellular network.

11. A method of managing profiles on a communication device (100, 200, 300), said communication device (100, 200, 300) comprising a plurality of processing modules (104, 106) arranged to process data and to store one or more profiles, wherein the method comprises a profile management unit (102) of said communication device (100, 200, 300) performing the followings steps:
managing one or more profiles stored on said processing modules (104, 106),
distributing one or more profiles to the processing modules (104, 106), including routing downloaded profiles to said processing modules (104, 106) in dependence on a result of an eligibility test, and
performing the eligibility test on parameters of memory availability and required support for a given technology.

12. The method of claim 11, wherein performing the eligibility test comprises determining which processing module (104, 106) has the capability to host and execute a given profile.

13. The method of claims 11 or 12, wherein the profile management unit (102) performs the step of:
distributing a plurality of profiles to the processing modules (104, 106) in a balanced manner, thereby balancing the use of resources, including available memory space of the particular processing modules (104, 106), for hosting profiles in the communication device (100, 200, 300) as a whole in a balanced manner.

14. A computer program comprising non-transient executable instructions which, when executed, carry out the method of any one of the claims 11 to 13.

## Patentansprüche

1. Eine Kommunikationsvorrichtung (100, 200, 300) aufweisend:
eine Mehrzahl von Verarbeitungsmodulen (104, 106), welche eingerichtet sind zum Verarbeiten von Daten und zum Speichern von einem oder mehreren Profilen;
eine Profil Managementeinheit (102), welche eingerichtet ist zum Managen von einem oder mehreren Profilen, die gespeichert sind auf den Verarbeitungsmodulen (104, 106), wobei die Profil Managementeinheit (102) eingerichtet ist zum Verteilen von einem oder mehreren Profilen zu den Verarbeitungsmodulen (104, 106) umfassend Routen von heruntergeladenen Profilen zu den Verarbeitungsmodulen (104, 106) in Abhängigkeit von einem Ergebnis von einem Eignungstest,
**dadurch gekennzeichnet, dass** die Profil Managementeinheit (102) eingerichtet ist zum Ausführen des Eignungstests an Parametern von Speicherverfügbarkeit und benötigter Unterstützung für eine gegebene Technologie.

2. Die Kommunikationsvorrichtung gemäß Anspruch 1,
wobei die Profil Managementeinheit (102) eingerichtet ist zum, wenn Ausführen des Eignungstests, Bestimmen, welches Verarbeitungsmodul (104, 106) die Fähigkeit hat zum Hosten und Ausführen eines gegebenen Profils.

3. Die Kommunikationsvorrichtung gemäß Anspruch 1 oder 2,
wobei die Profil Managementeinheit (102) eingerichtet ist zum Verteilen einer Mehrzahl von Profilen zu den Verarbeitungsmodulen (104, 106) in einer ausbalancierten Weise.

4. Die Kommunikationsvorrichtung gemäß Anspruch 3,
wobei Verteilen einer Mehrzahl von Profilen zu den Verarbeitungsmodulen (104, 106) in einer ausbalancierten Weise aufweist
Ausgleichen der Verwendung von Ressourcen umfassend verfügbaren Speicherplatz von den besonderen Verarbeitungsmodulen (104, 106) zum Hosten von Profilen in der Kommunikationsvorrichtung (100, 200, 300) als ein Gesamtes in einer ausbalancierten Weise.

5. Die Kommunikationsvorrichtung gemäß irgendeinem vorherigen Anspruch,
wobei die Verarbeitungsmodule (104, 106) umfassen zumindest eines von:
einem Teilnehmer Identifizierungssystem, SIM,
einem Sicherheitselement, SE,
einer eingebetteten universell integrierten Schaltkreiskarte, eUICC.

6. Die Kommunikationsvorrichtung (100) gemäß irgendeinem vorherigen Anspruch, ferner aufweisend
ein Benutzerinterface zum Selektieren eines Profils.

7. Die Kommunikationsvorrichtung (100, 200, 300) gemäß irgendeinem vorherigen Anspruch,
wobei die Profile umfassen zumindest eines von:
einem Dateisystem;
einem oder mehreren Netzwerk Zugangsberechtigungsnachweisen,
einem oder mehreren Anwendungen und anwendungsbezogenen Daten.

8. Die Kommunikationsvorrichtung (200. 300) gemäß irgendeinem vorherigen Anspruch, ferner aufweisend
einen Basisband Prozessor (202) und einen Nahfeld Kommunikation, NFC, Kontroller (204),
wobei die Profil Managementeinheit (102) ferner eingerichtet ist zum Veranlassen des Basisband Prozessors (202) und/oder des NFC Kontrollers (204) zum Schalten zu dem selektierten Profil.

9. Die Kommunikationsvorrichtung (200, 300) gemäß Anspruch 8,
wobei die Profil Managementeinheit (102) ferner eingerichtet ist zum Veranlassen des Basisband Prozessors (202) zum Initialisieren des Verarbeitungsmoduls (104, 106), auf welchem das selektierte Profil gespeichert ist.

10. Die Kommunikationsvorrichtung gemäß Anspruch 9,
wobei die Profil Managementeinheit (102) ferner eingerichtet ist zum Veranlassen des Basisband Prozessors (202) zum Authentifizieren des Verarbeitungsmoduls (104, 106) zu einem Mobilfunknetz.

11. Ein Verfahren zum Managen von Profilen auf einer Kommunikationsvorrichtung (100, 200, 300),
wobei die Kommunikationsvorrichtung (100, 200, 300) aufweist eine Mehrzahl von Verarbeitungsmodulen (104, 106), welche eingerichtet sind zum Verarbeiten von Daten und zum Speichern von einem oder mehreren Profilen,
wobei das Verfahren aufweist eine Profil Managementeinheit (102) von der Kommunikationsvorrichtung (100, 200, 300), welche ausführt die folgenden Schritte:
Managen von einem oder mehreren Profilen, welche gespeichert sind auf den Verarbeitungsmodulen (104, 106),
Verteilen von einem oder mehreren Profilen zu den Verarbeitungsmodulen (104, 106), umfassend Routen von heruntergeladenen Profilen zu den Verarbeitungsmodulen (104, 106) in Abhängigkeit von einem Ergebnis von einem Eignungstest, und
Ausführen des Eignungstests an Parametern von Speicherverfügbarkeit und benötigter Unterstützung für eine gegebene Technologie.

12. Das Verfahren gemäß Anspruch 11,
wobei Ausführen des Eignungstests aufweist Bestimmen, welches Verarbeitungsmodul (104, 106) die Fähigkeit hat zum Hosten und Durchführen eines gegebenen Profils.

13. Das Verfahren gemäß der Ansprüche 11 oder 12,
wobei die Profil Managementeinheit (102) ausführt die Schritte von:
Verteilen einer Mehrzahl von Profilen zu den Verarbeitungsmodulen (104, 106) in einer ausbalancierten Weise, damit Ausgleichen der Verwendung von Ressourcen umfassend verfügbaren Speicherplatz von den bestimmten Verarbeitungsmodulen (104, 106) zum Hosten von Profilen in der Kommunikationsvorrichtung (100, 200, 300) als ein Ganzes in einer ausbalancierten Weise.

14. Ein Computerprogramm aufweisend nicht-transiente ausführbare Instruktionen, welche, wenn diese ausgeführt werden, durchführen das Verfahren gemäß irgendeinem der Ansprüche 11 bis 13.

## Revendications

1. Dispositif de communication (100, 200, 300), comprenant :
une pluralité de modules de traitement (104, 106) conçus pour traiter des données et pour enregistrer un ou plusieurs profils ;
une unité de gestion de profils (102) conçue pour gérer un ou plusieurs profils enregistrés sur lesdits modules de traitement (104, 106),
l'unité de gestion de profils (102) étant conçue pour distribuer un ou plusieurs profils aux modules de traitement (104, 106), notamment en acheminant des profils téléchargés vers lesdits modules de traitement (104, 106) en fonction d'un résultat d'un test d'éligibilité,
**caractérisé en ce que** l'unité de gestion de profils (102) est conçue pour réaliser le test d'éligibilité sur des paramètres de disponibilité mémoire et de compatibilité exigée avec une technologie donnée.

2. Dispositif de communication selon la revendication 1, dans lequel l'unité de gestion de profils (102) est conçue pour, lors de la réalisation du test d'éligibilité, déterminer quel module de traitement (104, 106) a la capacité d'héberger et d'exécuter un profil donné.

3. Dispositif de communication selon la revendication 1 ou 2, dans lequel l'unité de gestion de profils (102) est conçue pour distribuer une pluralité de profils aux modules de traitement (104, 106) d'une manière équilibrée.

4. Dispositif de communication selon la revendication 3, dans lequel la distribution d'une pluralité de profils aux modules de traitement (104, 106) d'une manière équilibrée comprend l'équilibrage de l'utilisation de ressources, notamment d'un espace mémoire disponible des modules de traitement particuliers (104, 106), pour l'hébergement de profils dans le dispositif de communication (100, 200, 300) globalement d'une manière équilibrée.

5. Dispositif de communication selon l'une quelconque des revendications précédentes, dans lequel les modules de traitement (104, 106) comportent au moins un élément dans le groupe constitué par : un module d'identité d'abonné, noté SIM, un élément sécurisé, noté SE, une carte à circuit intégré universelle incorporée, notée eUICC.

6. Dispositif de communication (100) selon l'une quelconque des revendications précédentes, comprenant en outre une interface utilisateur permettant la sélection d'un profil.

7. Dispositif de communication (100, 200, 300) selon l'une quelconque des revendications précédentes, dans lequel lesdits profils comportent au moins un élément dans le groupe constitué par : un système de fichiers, un ou plusieurs justificatifs d'identité pour un accès réseau, une ou plusieurs applications et des données liées à une ou des applications.

8. Dispositif de communication (200, 300) selon l'une quelconque des revendications précédentes, comprenant en outre un processeur en bande de base (202) et un contrôleur de communication en champ proche, notée NFC, (204), l'unité de gestion de profils (102) étant conçue en outre pour faire en sorte que le processeur en bande de base (202) et/ou le contrôleur NFC (204) commutent/commute sur le profil sélectionné.

9. Dispositif de communication (200, 300) selon la revendication 8, dans lequel l'unité de gestion de profils (102) est conçue en outre pour faire en sorte que le processeur en bande de base (202) initialise le module de traitement (104, 106) sur lequel le profil sélectionné est enregistré.

10. Dispositif de communication selon la revendication 9, dans lequel l'unité de gestion de profils (102) est conçue en outre pour faire en sorte que le processeur en bande de base (202) authentifie ledit module de traitement (104, 106) auprès d'un réseau cellulaire.

11. Procédé de gestion de profils sur un dispositif de communication (100, 200, 300), ledit dispositif de communication (100, 200, 300) comprenant une pluralité de modules de traitement (104, 106) conçus pour traiter des données et pour enregistrer un ou plusieurs profils, le procédé comprenant la réalisation, par une unité de gestion de profils (102) dudit dispositif de communication (100, 200, 300), des étapes suivantes :
la gestion d'un ou de plusieurs profils enregistrés sur lesdits modules de traitement (104, 106),
la distribution d'un ou de plusieurs profils aux modules de traitement (104, 106), notamment l'acheminement de profils téléchargés vers lesdits modules de traitement (104, 106) en fonction d'un résultat d'un test d'éligibilité, et
la réalisation du test d'éligibilité sur des paramètres de disponibilité mémoire et de compatibilité exigée avec une technologie donnée.

12. Procédé selon la revendication 11, dans lequel la réalisation du test d'éligibilité comprend la détermination de quel module de traitement (104, 106) a la capacité d'héberger et d'exécuter un profil donné.

13. Procédé selon les revendications 11 ou 12, dans lequel l'unité de gestion de profils (102) réalise l'étape suivante :
la distribution d'une pluralité de profils aux modules de traitement (104, 106) d'une manière équilibrée, conduisant à l'équilibrage de l'utilisation de ressources, notamment d'un espace mémoire disponible des modules de traitement particuliers (104, 106), pour l'hébergement de profils dans le dispositif de communication (100, 200, 300) globalement d'une manière équilibrée.

14. Programme d'ordinateur comprenant des instructions exécutables non transitoires qui, une fois exécutées, accomplissent le procédé selon l'une quelconque des revendications 11 à 13.
